# EUROPEAN PATENT SPECIFICATION

(11) **EP 3 110 762 B1**
(45) Date of publication and mention of the grant of the patent: **08.08.2018**
(21) Application number: 15706732.3
(22) Date of filing: 17.02.2015
(51) Int. Cl.: C01G 53/00, H01M 4/00

(54) **PROCESS FOR MAKING FLUORINATED LITHIATED MIXED TRANSITION METAL OXIDES**
VERFAHREN ZUR HERSTELLUNG FLUORIERTER LITHIUMHALTIGER GEMISCHTER ÜBERGANGSMETALLOXIDE
PROCÉDÉ POUR FABRIQUER DES OXYDES DE MÉTAUX DE TRANSITION LITHIÉS MÉLANGÉ

(30) Priority: 27.02.2014 EP 14157008
(43) Date of publication of application: 04.01.2017
(73) Proprietor: BASF SE, 67056 Ludwigshafen am Rhein (DE)
(72) Inventor: VOLKOV, Aleksei, 67065 Ludwigshafen (DE); MIENTUS, Bernhard, 67069 Ludwigshafen (DE); SCHRÖDLE, Simon, 67056 Ludwigshafen (DE); LAMPERT, Jordan Keith, Cleveland, Ohio 44113 (US)
(74) Representative: BASF IP Association
(86) International application number: PCT/EP2015/053257
(87) International publication number: WO 2015/128219

(56) References cited:
- WO-A1-2006/109930
- US-A1- 2004 091 779
- US-A1- 2011 017 528

## Description

The present invention is directed towards a process for making a fluorinated lithiated transition metal oxide, comprising the step of treating a lithiated transition metal oxide according to general formula (I)

Li₁₊ₓ(NiₐCo_{b}Mn_{c}M_{d})₁₋ₓO₂ (I)

wherein
x is in the range of from zero to 0.2
a is in the range of from 0.5 to 0.9,
b is in the range of from zero to 0.35,
c is in the range of from 0.05 to 0.4,
d is in the range of from zero to 0.2,
with a + b+ c+ d = 1
M being selected from Al, Mg, Ca, V, Mo, Ti, Fe, Zn, Nb, W, and Zr,
wherein the particles from the above compound are being partially covered with LiF,
containing at least two different transition metal cations and, as an impurity, at least one lithium compound selected from lithium hydroxide, lithium oxide and lithium carbonate and from combinations of at least two thereof, with at least one fluorine compound selected from HF, NH₄F and (NH₄)₃AlF₆.

Lithiated transition metal oxides are currently being used as electrode materials for lithium-ion batteries. Extensive research and developmental work has been performed in the past years to improve properties like charge density, energy, but also other properties like the reduced cycle life and capacity loss that may adversely affect the lifetime or applicability of a lithium-ion battery.

In a usual process for making cathode active materials for lithium-ion batteries, first a so-called precursor is being formed by coprecipitating the transition metals as carbonates, oxides or preferably as hydroxides that may or may not be basic. The precursor is then mixed with a lithium salt such as, but not limited to LiOH, Li₂O, LiNO₃ or - especially - Li₂CO₃.

In many instances, traces of substances are made responsible for the deterioration of the cycling behavior of lithium-ion batteries. One important material that is frequently made responsible for the deterioration of the capacity after multiple cycle steps are lithium compounds such as Li oxide, lithium hydroxide and lithium carbonate. Traces of lithium carbonate in lithiated transition metal oxides may stem from unreacted lithium carbonate used as common starting material for the introduction of lithium into the respective precursor. Although it has been suggested to replace lithium carbonate by lithium hydroxide or some other lithium compound other than lithium carbonate the favorable price and easy handling still drives many manufacturers to use it. In particular, the conversion of precursors containing 60 mole-% or more of Ni, relating to total transition metal content, with lithium salts may be slow, resulting in unreacted lithium salts. Such unreacted lithium salts may be converted to lithium carbonate during storage or handling under air. Li₂CO₃ may react with traces of any Lewis acid formed during charging or discharging of a battery. Upon such a reaction, CO₂ will be formed that may damage the battery during the operation.

For making a cathode, many sources suggest to slurry a cathode active material, a binder and carbon. However, residual LiOH as well as Li₂O may lead to gelation of such slurries. Fluorinated lithiated transition metal oxide are also known from US2011/0017528 and US2004091779.

It was therefore an objective of the present invention to provide a method for making an electrode material that has a good cycle stability and therefore provides an extended life of the battery. In addition, it was an objective of the present invention to provide an electrode material for lithium ion batteries with a good cycle stability and life time. In addition, it was an objective of the present invention to provide uses for electrode materials.

Accordingly, the process defined at the outset has been found.

In a first aspect, the present invention is directed towards a process, hereinafter also being referred to as inventive process or process according to the present invention. The inventive process is a process for making a fluorinated lithiated transition metal oxide. A fluorinated lithiated transition metal oxide is in the context of the present invention is an oxide that does not only contain oxide anions but also fluoride anions. The fluoride anions in fluorinated lithiated transition metal oxides in the context of the present invention are preferably unevenly distributed on the outer surface and within pores of the particles of the respective fluorinated lithiated transition metal oxide. As cations of such oxide, there are lithium and at least two different transition metal cations present.

Preferably, during performing the inventive process, fluoride ions replace carbonate anions.

In the context of fluorinated lithiated transition metal oxides and of lithiated transition metal oxides, a wording like "contains transition metal" or "contains lithium" refers to the respective cations.

The two transition metals, hereinafter also being referred to as mandatory transition metals, contained in the fluorinated oxide, hereinafter also being referred to as mandatory transition metals, are each present in at least 5 mole-%, referring to the total transition metal content. Preferably, such mandatory transition metals are each present in at least 10 mole-%. The mandatory transition metals are nickel and manganese.

In one embodiment of the present invention, the sum of contents of the mandatory transition metals is at least 55 mole-%, referring to the total transition metal content, preferably at least 65 mole-%. Mandatory transition metals are Ni and Mn.

The fluorinated lithiated transition metal oxide may have a spinel structure or preferably a layered structure.

The inventive process starts by providing a lithiated transition metal oxide. Said lithiated transition metal oxide contains Li⁺ and the mandatory transition metals as defined above.

The mandatory transition metals are each present in lithiated transition metal oxide in at least 5 mole-%, referring to the total transition metal content. Preferably, such mandatory transition metals are each present in at least 10 mole-%.

In the present invention, the mandatory transition metals in lithiated transition metal oxide are Ni and Mn.

In the present invention, lithiated transition metal oxide may contain transition metals other than Ni and Mn. Examples of other transition metals are Fe, Co, Ti, V, Mo and Zn. In a preferred embodiment, lithiated transition metal oxide also contains Co.

Many elements are ubiquitous. For example, sodium and iron are detectable in certain very small proportions in virtually all inorganic materials. In the context of the present invention, proportions of less than 0.05% mol-% of the cations of the respective lithiated transition metal oxide are disregarded.

In one embodiment of the present invention, lithiated transition metal oxides may contain one or more metal M. Examples of metal M are Al, Mg, Ca, V, Mo, Ti, Fe, Zn, Nb, W, and Zr.

Said lithiated transition metal oxide is a compound according to general formula (I)

Li₁₊ₓ(NiₐCo_{b}Mn_{c}M_{d})₁₋ₓO₂ (I)

wherein
x is in the range of from zero to 0.2, preferably from 0.005 to 0.05,
a is in the range of from 0.5 to 0.9, preferably from 0.6 to 0.8,
b is in the range of from zero to 0.35, preferably from 0.01 to 0.25,
c is in the range of from 0.05 to 0.4, preferably of from 0.05 to 0.3,
d is in the range of from zero to 0.2, preferably from zero to 0.1,
with a + b+ c+ d = 1
M being selected from Al, Mg, Ca, V, Mo, Ti, Fe, Zn, Nb, W, and Zr.

The lithiated transition metal oxide also contains, as an impurity, at least one lithium compound selected from lithium hydroxide, lithium oxide and lithium carbonate and from combinations of at least two thereof, for example a combination of Li₂O and LiOH or a combination of LiOH and Li₂CO₃ or a combination of Li₂O and Li₂CO₃ or a combination of LiOH and Li₂O and Li₂CO₃. The term impurity in the context of the lithium compound selected from lithium hydroxide, lithium oxide and lithium carbonate and combinations of at least two thereof implies that such lithium compound stems from a starting material or an impurity in at least one starting material or has been formed as a side reaction during the synthesis of the respective lithiated transition metal oxide. Carbonate ions are usually combined with lithium cations for calculation purposes. Therefore, in the course of the current invention, Li₂CO₃ is not necessarily contained as crystals of Li₂CO₃ but may as well be a calculated value. Also, the amount of Li₂O or LiOH may be calculated as Li₂CO₃. Such impurity lithium compound selected from lithium hydroxide, lithium oxide and lithium carbonate and from combinations of at least two thereof may - in the context of the present invention - also be referred to as "Li₂CO₃ impurity".

In one embodiment of the present invention, the Li₂CO₃ impurity content of lithiated transition metal oxide is in the range of from 0.1 to 2 % by weight, referring to lithiated transition metal oxide. The carbonate content can preferably be determined by slurrying the respective lithiated transition metal oxide in distilled water followed by filtration and subsequent titration of the filtrate with 0.1M aqueous HCl, or, as an alternative, by determination of the inorganic carbon with IR spectroscopy.

In the course of the process according to the present invention, lithiated transition metal oxide is treated with at least one fluorine compound selected from (NH₄)₃AlF₆ or NH₄F or preferably HF.

In one embodiment of the present invention, the treatment of lithiated transition metal oxide is carried out at a temperature in the range of from 300 to 500°C, preferably 350 to 450°C.

In one embodiment of the present invention, said fluorine compound, preferably NH₄F, is being transferred into the gas phase by sublimation before contacting it with said lithiated transition metal oxide. In another embodiment of the present invention, NH₄F is being generated by decomposing a compound that may release NH₄F, for example upon heating or by the aide of a catalyst. An example of such compounds is (NH₄)₃AlF₆. The NH₄F so formed is then transferred into the gas phase and then contacted with said lithiated transition metal oxide.

In one embodiment of the present invention, said fluorine compound, preferably HF, is being transferred into the gas phase by decomposition of a fluorine compound before contacting it with said lithiated transition metal oxide. Said decomposition may constitute a decomposition into HF and a salt. In another embodiment of the present invention, HF is being generated by decomposing a compound that may release HF, for example upon heating or by the aide of a catalyst. Examples of such compounds are NH₄F and (NH₄)₃AlF₆. The HF so formed is then contacted with said lithiated transition metal oxide.

In one embodiment of the present invention, the inventive process is being carried out by mixing lithiated transition metal oxide and NH₄F and then heating the resultant mixture to 300 to 500°C. NH₄F will then be sublimed and decompose *in situ* and react with lithiated transition metal oxide.

In one embodiment of the present invention, the inventive process is being carried out by mixing lithiated transition metal oxide and a fluorine compound other than HF and then heating the resultant mixture to 300 to 500°C. HF will then be generated *in situ* and reacted with lithiated transition metal oxide.

In one embodiment of the present invention, said contacting of the fluorine compound with said lithiated transition metal oxide is achieved under oxygen. In another embodiment of the present invention, said contacting of the fluorine compound with said lithiated transition metal oxide is achieved under air or an inert gas, for example argon or nitrogen. Diluents other than air or nitrogen or noble gasses are possible but not preferred.

In one embodiment of the present invention, said contacting of the fluorine compound with said lithiated transition metal oxide is achieved in a fluidized bed.

In one embodiment of the present invention the inventive process is being carried out at normal pressure. In another embodiment of the present invention the inventive process is being carried out under reduced pressure, for example 500 to 995 mbar. In an alternative embodiment, of the present invention the inventive process is being carried at a pressure in the range of from 1000 mbar to 2,700 mbar.

Suitable reaction vessels for the inventive process are, for example, tank reactors without or with additional vessels, fluidized bed reactors, rotary kilns, pendulum kilns, and rotary hearth kilns. Rotary kilns are preferred.

In one embodiment of the present invention, the time for treatment of lithiated transition metal oxide with fluorine compound at a temperature in the range of from 300 to 500°C is in the range of from 10 minutes to 3 hours, preferably 30 to 90 minutes.

Another aspect of the present invention relates to a fluorinated lithiated transition metal oxide comprising at least one compound according to general formula (I)

Li₁₊ₓ(NiₐCo_{b}Mn_{c}M_{d})₁₋ₓO₂ (I)

wherein:
x is in the range of from zero to 0.2, preferably from 0.005 to 0.05,
a is in the range of from 0.5 to 0.9, preferably from 0.5 to 0.8,
b is in the range of from zero to 0.35, preferably from 0.01 to 0.25,
c is in the range of from 0.05 to 0.4, preferably of from 0.05 to 0.25,
d is in the range of from zero to 0.2,
with a + b+ c+ d = 1
M being selected from Al, Mg, Ca, V, Mo, Ti, Fe, Zn, Nb, W, and Zr,
wherein the particles from the above compound are being partially covered with LiF. Said partial coverage may also include the insertion of some LiF in the pores, especially in the pores of between primary particles of said fluorinated lithiated transition metal oxide. Said fluorinated lithiated transition metal oxide is hereinafter also being referred to as inventive fluorinated lithiated transition metal oxide.

In one embodiment of the present invention inventive fluorinated lithiated transition metal oxide contains in the range of from 0.01 to 1 % by weight Li₂CO₃, determined as Li₂CO₃ and referring to said fluorinated lithiated transition metal oxide.

In one embodiment of the present invention, the surface (BET) of inventive fluorinated lithiated transition metal oxide is in the range of from 0.2 to 10 m²/g, preferably from 0.3 to 1 m²/g. The surface (BET) can be determined by nitrogen absorption, for example according to DIN 66131.

In one embodiment of the present invention, inventive fluorinated lithiated transition metal oxide is in the form of agglomerated primary particles of inventive fluorinated lithiated transition metal oxide. Such agglomerates are then being referred to as secondary particles of inventive fluorinated lithiated transition metal oxide.

In one embodiment of the present invention, primary particles of inventive fluorinated lithiated transition metal oxide have an average diameter in the range from 1 to 2000 nm, preferably from 10 to 1000 nm, particularly preferably from 50 to 500 nm. The average primary particle diameter can, for example, be determined by SEM or TEM, or by LASER scattering technologies, for example at a pressure in the range of from 0.5 to 3 bar.

In one embodiment of the present invention, primary particles of inventive fluorinated lithiated transition metal oxide have an average diameter in the range from 1 to 2000 nm, preferably from 10 to 1000 nm, particularly preferably from 50 to 500 nm. The average primary particle diameter can, for example, be determined by SEM or TEM, or by LASER scattering technologies, for example at a pressure in the range of from 0.5 to 3 bar.

In one embodiment of the present invention, the particle diameter (D50) of secondary particles of inventive fluorinated lithiated transition metal oxide is in the range from 6 to 16 µm, especially 7 to 9 µm. The mean particle diameter (D50) in the context of the present invention refers to the median of the volume-based particle diameter, as can be determined, for example, by light scattering.

Inventive fluorinated lithiated transition metal oxide may in particular serve as electrode materials.

A further aspect of the present invention refers to electrodes comprising at least one inventive fluorinated lithiated transition metal oxide. They are particularly useful for lithium ion batteries. Lithium ion batteries comprising at least one electrode according to the present invention exhibit a very good discharge and cycling behavior. Preferably, also the cycle stability and the C-rate capacity behavior are improved. Electrodes comprising at least one electrode material according to the present invention are hereinafter also referred to as inventive electrodes or electrodes according to the present invention.

In one embodiment of the present invention, inventive electrodes contain
(A) at least one fluorinated lithiated transition metal oxide, as described above,
(B) carbon in an electrically conductive state, and
(C) a binder.

Electrodes according to the present invention further contain carbon in electrically conductive modification, in brief also referred to as carbon (B). Carbon (B) can be selected from soot, active carbon, carbon nanotubes, graphene, and graphite. Carbon (B) can be added as such during preparation of electrode materials according to the invention.

In one embodiment of the present invention, the ratio of carbon (B) to inventive fluorinated lithiated transition metal oxide is in the range of 1 to 15 % by weight, referring to total inventive electrode, preferably at least 2% by weight.

Electrodes according to the present invention can comprise further components. They can comprise a current collector, such as, but not limited to, an aluminum foil. They further comprise a binder (C).

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopoly-ethylene, but also copolymers of ethylene which comprise at least 50 mol% of copolymerized ethylene and up to 50 mol% of at least one further comonomer, for example α-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, C₁-C₁₀-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol% of copolymerized propylene and up to 50 mol% of at least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, C₁-C₁₀-alkyl esters of (meth)acrylic acid, divinylbenzene, especially 1,3-divinylbenzene, 1,2-diphenylethylene and α-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight M_{w} in the range from 50,000 to 1,000,000 g/mol, preferably to 500,000 g/mol.

Binder (C) may be cross-linked or non-cross-linked (co)polymers.

In a particularly preferred embodiment of the present invention, binder (C) is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive electrodes may comprise 1 to 15% by weight of binder(s) (C), referring to the sum of electrode material (A), carbon (B) and binder (C).

A further aspect of the present invention is an electrochemical cell, containing
(a) at least one cathode comprising fluorinated lithiated transition metal oxide, carbon (B), and binder (C),
(b) at least one anode, and
(c) at least one electrolyte.

Embodiments of cathode (a) have been described above in detail.

Anode (b) may contain at least one anode active material, such as carbon (graphite), TiO₂, lithium titanium oxide, silicon or tin. Anode (b) may additionally contain a current collector, for example a metal foil such as a copper foil.

Electrolyte (c) may comprise at least one non-aqueous solvent, at least one electrolyte salt and, optionally, additives.

Non-aqueous solvents for electrolyte (c) can be liquid or solid at room temperature and are preferably selected from among polymers, cyclic or acyclic ethers, cyclic and acyclic acetals and cyclic or acyclic organic carbonates.

Examples of suitable polymers are, in particular, polyalkylene glycols, preferably poly-C₁-C₄-alkylene glycols and in particular polyethylene glycols. Polyethylene glycols can here comprise up to 20 mol% of one or more C₁-C₄-alkylene glycols. Polyalkylene glycols are preferably polyalkylene glycols having two methyl or ethyl end caps.

The molecular weight M_{w} of suitable polyalkylene glycols and in particular suitable polyethylene glycols can be at least 400 g/mol.

The molecular weight M_{w} of suitable polyalkylene glycols and in particular suitable polyethylene glycols can be up to 5,000,000 g/mol, preferably up to 2,000,000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds of the general formulae (II) and (III) 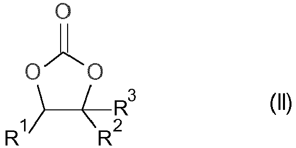 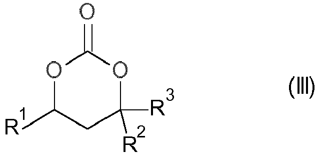 where R¹, R² and R³ can be identical or different and are selected from among hydrogen and C₁-C₄-alkyl, for example methyl, ethyl, n-propyl, isopropyl, n-butyl, isobutyl, sec-butyl and tert-butyl, with R² and R³ preferably not both being tert-butyl.

In particularly preferred embodiments, R¹ is methyl and R² and R³ are each hydrogen, or R¹, R² and R³ are each hydrogen.

Another preferred cyclic organic carbonate is vinylene carbonate, formula (IV).

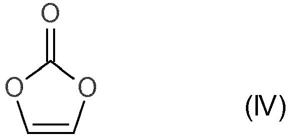

The solvent or solvents is/are preferably used in the water-free state, i.e. with a water content in the range from 1 ppm to 0.1% by weight, which can be determined, for example, by Karl-Fischer titration.

Electrolyte (c) further comprises at least one electrolyte salt. Suitable electrolyte salts are, in particular, lithium salts. Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄ and salts of the general formula (CₙF₂ₙ₊₁SO₂)ₜYLi, where m is defined as follows:
t = 1, when Y is selected from among oxygen and sulfur,
t = 2, when Y is selected from among nitrogen and phosphorus, and
t = 3, when Y is selected from among carbon and silicon.

Preferred electrolyte salts are selected from among LiC(CF₃SO₂)₃, LiN(CF₃SO₂)₂, LiPF₆, LiBF₄, LiClO₄, with particular preference being given to LiPF₆ and LiN(CF₃SO₂)₂.

In an embodiment of the present invention, batteries according to the invention comprise one or more separators (d) by means of which the electrodes are mechanically separated. Suitable separators (d) are polymer films, in particular porous polymer films, which are unreactive toward metallic lithium. Particularly suitable materials for separators (d) are polyolefins, in particular film-forming porous polyethylene and film-forming porous polypropylene.

Separators (d) composed of polyolefin, in particular polyethylene or polypropylene, can have a porosity in the range from 35 to 45%. Suitable pore diameters are, for example, in the range from 30 to 500 nm.

In another embodiment of the present invention, separators (D) can be selected from among PET nonwovens filled with inorganic particles. Such separators can have a porosity in the range from 40 to 55%. Suitable pore diameters are, for example, in the range from 80 to 750 nm.

Electrochemical cells according to the invention can further comprise a housing which can have any shape, for example cuboidal or the shape of a cylindrical disk. In one variant, a metal foil configured as a pouch is used as housing.

Electrochemical cells according to the invention provide a very good discharge and cycling behavior, in particular with respect to the capacity loss.

Batteries according to the invention can comprise two or more electrochemical cells that combined with one another, for example can be connected in series or connected in parallel. Connection in series is preferred. In batteries according to the present invention, at least one of the electrochemical cells contains at least one electrode according to the invention. Preferably, in electrochemical cells according to the present invention, the majority of the electrochemical cells contain an electrode according to the present invention. Even more preferably, in batteries according to the present invention all the electrochemical cells contain electrodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The present invention is further illustrated by working examples.

### Examples

### I. Manufacture of a lithiated transition metal oxide

### I.1 Manufacture of lithiated transition metal oxide (I.a)

In a blender, Ni_{0.8}Co_{0.1}Mn_{0.1}(OH)₂ was mixed with LiOH so that the Li/total transition metal molar ratio was 1.03/1. The mixture so obtained was calcined in a box furnace under an oxygen atmosphere with the following temperature program: raise for 3K/min to 400°C, maintain at 400°C for 3 hours, raise 3K/min to 675°C, maintain at 675°C for 6 hours, raise 3 K/min to 800°C, maintain at 800°C for 6 hours. After that, material so obtained was cooled to room temperature under the oxygen atmosphere within a period of 12 hours, deagglomerated in a mortar and sifted through a sieve with 32 µm mesh size. Lithiated transition metal oxide (I.a) was obtained.

### II. Treatment with a fluorine compound

### 11.1 Manufacture of inventive fluorinated lithiated transition metal oxide FM.1

An amount of 20 g of lithiated transition metal oxide (I.a) was mixed in a mortar together with 1.0 weight % NH₄F and then inserted into a box furnace and treated under oxygen with the following temperature program: raise 3 K/min to 410°C, maintain at 410°C for 1 hour. Then, the material so obtained was cooled to room temperature under oxygen within a period of 12 hours, deagglomerated in a mortar and sifted through a sieve with 32 µm mesh size. Inventive fluorinated lithiated transition metal oxide FM.1 was obtained.

### 11.2 Manufacture of inventive fluorinated lithiated transition metal oxide FM.2

An amount of 20 g of lithiated transition metal oxide (I.a) was mixed in a mortar together with 0.5 weight % (NH₄)3AlF₆ and then inserted into a box furnace and treated under oxygen with the following temperature program: raise 3 K/min to 410°C, maintain at 410°C for 1 hour. Then, the material so obtained was cooled to room temperature under oxygen within a period of 12 hours, deagglomerated in a mortar and sifted through a sieve with 32 µm mesh size. Inventive fluorinated lithiated transition metal oxide FM.2 was obtained.

### 11.3 Manufacture of a reference material

For reference purposes, an amount of 20 g of pure lithiated transition metal oxide (I.a) free from NH₄F was inserted into the same box furnace as above and treated under oxygen with the same temperature program as above: raise 3 K/min to 410°C, maintain at 410°C for 1 hour. After said treatment, the material so obtained was cooled to room temperature under oxygen, deagglomerated in a mortar and sifted through a sieve with 32 µm mesh size. Comparative lithiated transition metal oxide C-TM.3 was obtained.

Discharge capacities C/5 and inorganic carbon content (determined as Li₂CO₃) of the above inventive materials and the reference material are summarized in Table 1.

**Table 1: Discharge capacities C/5 and inorganic carbon content (determined as Li₂CO₃) of inventive materials and the reference material**

| Sample | Battery | Discharge capacities C/5 [mAh/g] | inorganic carbon content (as Li₂CO₃) [wt%] |
|---|---|---|---|
| FM.1 | (BAT.1) | 197 | 0.09 |
| FM.2 | (BAT.2) | 195 | 0.40 |
| C-TM.3 | C-(BAT.3) | 183 | 0.68 |

### III. Manufacture of cathodes and electrochemical cells and tests thereof

### 111.1 Manufacture of an inventive battery

To produce a cathode (a.1), the following ingredients were blended with one another: 88 g of FM.1
6 g polyvinylidene difluoride, (d.1) ("PVdF"), commercially available as Kynar Flex® 2801 from Arkema Group,
3 g carbon black, (c.1), BET surface area of 62 m²/g, commercially available as "Super C 65L" from Timcal,
3 g graphite, (c.2), commercially available as KS6 from Timcal.
While stirring, a sufficient amount of N-methylpyrrolidone (NMP) was added and the mixture was stirred with an Ultraturrax until a stiff, lump-free paste had been obtained.

Cathodes were prepared as follows: On a 30 µm thick aluminum foil the paste was applied with a 15 µm doctor blade. The loading after drying was 2.0 mAh/cm². The loaded foil was dried overnight in a vacuum oven at 105°C. After cooling to room temperature in a hood disc-shaped cathodes were punched out of the foil. The cathode discs were then weighed and introduced into an argon glove box, where they are again vacuum-dried. Then, cells with the cathode discs were built.

Electrochemical testing was conducted in "TC1" coin type cells. The electrolyte (c.1) used was a 1 M solution of LiPF₆ in ethyl methyl carbonate/ethylene carbonate (volume ratio 1:1).

Separator (D.1): glass fiber. Anode (B.1): graphite. Potential range of the cell: 3 V - 4.3 V.

Inventive battery (BAT.1) was obtained.

### III.2 Manufacture of cathodes and batteries according to the invention, and of comparative cathodes and batteries

For the manufacture of inventive battery (BAT.2, the above protocol was followed but FM.1 was replaced by an identical amount of FM.2.

For comparative purposes, the above protocol was followed but FM.1 was replaced by an identical amount of C-TM.3.

Comparative battery C-(BAT.3) was obtained.

Batteries according to the invention and comparative batteries are each subjected to the following cycling program: Potential range of the cell: 3.0 V - 4.3 V., 0.1 C (first and second cycles), 0.5 C (from the third cycle). 1 C = 150 mA/g. Temperature: ambient temperature.

The discharge capacities are summarized in Table 1.

## Claims

1. Process for making a fluorinated lithiated transition metal oxide according to general formula (I)
Li₁₊ₓ(NiₐCo_{b}Mn_{c}M_{d})₁₋ₓO₂ (I)
wherein
x is in the range of from zero to 0.2
a is in the range of from 0.5 to 0.9,
b is in the range of from zero to 0.35,
c is in the range of from 0.05 to 0.4,
d is in the range of from zero to 0.2,
with a + b+ c+ d = 1
M being selected from Al, Mg, Ca, V, Mo, Ti, Fe, Zn, Nb, W, and Zr,
wherein the particles from the above compound are being partially covered with LiF,
comprising the step of treating a lithiated transition metal oxide containing at least two different transition metal cations and, as an impurity, at least one lithium compound selected from lithium hydroxide, lithium oxide and lithium carbonate and from combinations of at least two thereof, with at least one fluorine compound selected from HF, NH₄F and (NH₄)₃AlF₆.

2. Process according to claim 1, wherein the treatment is carried out at a temperature in the range of from 300 to 500°C.

3. Process according to claim 1 or 2 wherein the total impurity of lithium compounds selected from Li₂O, LiOH and Li₂CO₃ amounts to in the range of from 0.1 to 2 weight %, determined as Li₂CO₃ and referring to said lithiated transition metal oxide.

4. Process according to any of the preceding claims wherein a, b, c and d are defined as follows:
a is in the range of from 0.6 to 0.8,
b is in the range of from 0.01 to 0.25,
c is in the range of from 0.05 to 0.3,
d is in the range of from zero to 0.1.

5. Process according to any of the preceding claims wherein said lithiated transition metal oxide is a powder with an average particle diameter of the secondary particles in the range of from 1 to 50 µm.

6. Process according to any of the preceding claims wherein said fluorine compound is contacted in solid state with said lithiated transition metal oxide.

7. Process according to any of claims 1 to 5 wherein said fluorine compound is being transferred into the gas phase by sublimation or decomposition into a salt and HF before contacting it with said lithiated transition metal oxide.

8. Process according to any of the preceding claims wherein said lithiated transition metal oxide containing at least two different transition metal cations is being treated with in the range of from 0.5 to 2% by weight of fluorine compound.

9. Fluorinated lithiated transition metal oxide comprising at least one compound according to general formula (I)
Li₁₊ₓ(NiₐCo_{b}Mn_{c}M_{d})₁₋ₓO₂ (I)
wherein
x is in the range of from zero to 0.2
a is in the range of from 0.5 to 0.9,
b is in the range of from zero to 0.35,
c is in the range of from 0.05 to 0.4,
d is in the range of from zero to 0.2,
with a + b+ c+ d = 1
M being selected from Al, Mg, Ca, V, Mo, Ti, Fe, Zn, Nb, W, and Zr,
wherein the particles from the above compound are being partially covered with LiF.

10. Fluorinated lithiated transition metal oxide according to claim 9 wherein said fluorinated lithiated transition metal oxide contains in the range of from 0.01 to 1 % by weight Li₂CO₃, determined as Li₂CO₃ and referring to said fluorinated lithiated transition metal oxide.

11. Fluorinated lithiated transition metal oxide according to claim 9 or 10 wherein said fluorinated lithiated transition metal oxide is a powder with an average particle diameter of the secondary particles in the range of from 1 to 50 µm.

12. Electrode for a lithium ion battery comprising
(A) at least one fluorinated lithiated transition metal oxide according to any of claims 9 to 11,
(B) carbon in an electrically conductive state,
(C) a binder.

13. Electrochemical cell comprising at least one electrode according to claim 12.

## Patentansprüche

1. Verfahren zur Herstellung eines fluorierten lithiierten Übergangsmetalloxids gemäß der allgemeinen Formel (I)
Li₁₊ₓ(NiₐCo_{b}Mn_{c}M_{d})₁₋ₓO₂ (I)
wobei
x im Bereich von null bis 0,2 liegt,
a im Bereich von 0,5 bis 0,9 liegt,
b im Bereich von null bis 0,35 liegt,
c im Bereich von 0,05 bis 0,4 liegt,
d im Bereich von null bis 0,2 liegt,
wobei a + b + c + d = 1,
wobei M aus Al, Mg, Ca, V, Mo, Ti, Fe, Zn, Nb, W und Zr ausgewählt ist,
wobei die Teilchen aus der obigen Verbindung teilweise mit LiF bedeckt sind,
umfassend den Schritt des Behandelns eines lithiierten Übergangsmetalloxids, das mindestens zwei verschiedene Übergangsmetallkationen und als Verunreinigung mindestens eine Lithiumverbindung, die aus Lithiumhydroxid, Lithiumoxid und Lithiumcarbonat und Kombinationen von mindestens zwei davon ausgewählt ist, enthält, mit mindestens einer aus HF, NH₄F und (NH₄)₃AlF₆ ausgewählten Fluorverbindung.

2. Verfahren nach Anspruch 1, bei dem die Behandlung bei einer Temperatur im Bereich von 300 bis 500 °C durchgeführt wird.

3. Verfahren nach Anspruch 1 oder 2, bei dem die gesamte Verunreinigung von aus Li₂O, LiOH und Li₂CO₃ ausgewählten Lithiumverbindungen im Bereich von 0,1 bis 2 Gew.-%, bestimmt als Li₂CO₃ und bezogen auf das lithiierte Übergangsmetalloxid, liegt.

4. Verfahren nach einem der vorhergehenden Ansprüche, wobei a, b, c und d wie folgt definiert sind:
a liegt im Bereich von 0,6 bis 0,8,
b liegt im Bereich von 0,01 bis 0,25,
c liegt im Bereich von 0,05 bis 0,3,
d liegt im Bereich von null bis 0,1.

5. Verfahren nach einem der vorhergehenden Ansprüche, bei dem es sich bei dem lithiierten Übergangsmetalloxid um ein Pulver mit einem mittleren Teilchendurchmesser der Sekundärteilchen im Bereich von 1 bis 50 µm handelt.

6. Verfahren nach einem der vorhergehenden Ansprüche, bei dem man die Fluorverbindung in festem Zustand mit dem lithiierten Übergangsmetalloxid in Berührung bringt.

7. Verfahren nach einem der Ansprüche 1 bis 5, bei dem man die Fluorverbindung durch Sublimation oder Zersetzung zu einem Salz und HF in die Gasphase überführt, bevor man sie mit dem lithiierten Übergangsmetalloxid in Berührung bringt.

8. Verfahren nach einem der vorhergehenden Ansprüche, bei dem man das lithiierte Übergangsmetalloxid, das mindestens zwei verschiedene Übergangsmetallkationen enthält, mit 0,5 bis 2 Gew.-% Fluorverbindung behandelt.

9. Fluoriertes lithiiertes Übergangsmetalloxid, umfassend mindestens eine Verbindung gemäß der allgemeinen Formel (I)
Li₁₊ₓ(NiₐCo_{b}Mn_{c}M_{d})₁₋ₓO₂ (I)
wobei
x im Bereich von null bis 0,2 liegt,
a im Bereich von 0,5 bis 0,9 liegt,
b im Bereich von null bis 0,35 liegt,
c im Bereich von 0,05 bis 0,4 liegt,
d im Bereich von null bis 0,2 liegt,
wobei a + b + c + d = 1,
wobei M aus Al, Mg, Ca, V, Mo, Ti, Fe, Zn, Nb, W und Zr ausgewählt ist,
wobei die Teilchen aus der obigen Verbindung teilweise mit LiF bedeckt sind.

10. Fluoriertes lithiiertes Übergangsmetalloxid nach Anspruch 9, wobei das fluorierte lithiierte Übergangsmetalloxid im Bereich von 0,01 bis 1 Gew.-% Li₂CO₃, bestimmt als Li₂CO₃ und bezogen auf das fluorierte lithiierte Übergangsmetalloxid, enthält.

11. Fluoriertes lithiiertes Übergangsmetalloxid nach Anspruch 9 oder 10, wobei sich bei dem fluorierten lithiierten Übergangsmetalloxid um ein Pulver mit einem mittleren Teilchendurchmesser der Sekundärteilchen im Bereich von 1 bis 50 µm handelt.

12. Elektrode für eine Lithiumionenbatterie, umfassend
(A) mindestens ein fluoriertes lithiiertes Übergangsmetalloxid nach einem der Ansprüche 9 bis 11,
(B) Kohlenstoff in einem elektrisch leitfähigen Zustand,
(C) ein Bindemittel.

13. Elektrochemische Zelle, umfassend mindestens eine Elektrode nach Anspruch 12.

## Revendications

1. Procédé de fabrication d'un oxyde de métal de transition lithié fluoré selon la formule générale (I)
Li₁₊ₓ(NiₐCO_{b}Mn_{c}M_{d})₁₋ₓO₂ (I)
dans laquelle
x est dans la plage de zéro à 0,2
a est dans la plage de 0,5 à 0,9,
b est dans la plage de zéro à 0,35,
c est dans la plage de 0,05 à 0,4,
d est dans la plage de zéro à 0,2,
avec a + b+ c+ d = 1
M étant choisi parmi Al, Mg, Ca, V, Mo, Ti, Fe, Zn, Nb, W, et Zr,
dans lequel les particules du composé ci-dessus sont partiellement recouvertes avec LiF,
comprenant l'étape de traitement d'un oxyde de métal de transition lithié contenant au moins deux cations de métal de transition différents et, en tant qu'impureté, au moins un composé de lithium choisi parmi l'hydroxyde de lithium, l'oxyde de lithium et le carbonate de lithium et des combinaisons d'au moins deux de ceux-ci, avec au moins un composé fluoré choisi parmi HF, NH₄F et (NH₄)₃AlF₆.

2. Procédé selon la revendication 1, dans lequel le traitement est conduit à une température dans la plage de 300 à 500 °C.

3. Procédé selon la revendication 1 ou 2 dans lequel l'impureté totale de composés de lithium choisis parmi Li₂O, LiOH et Li₂CO₃ est dans une quantité dans la plage de 0,1 à 2 % en poids, déterminée en Li₂CO₃ et par rapport audit oxyde de métal de transition lithié.

4. Procédé selon l'une quelconque des revendications précédentes dans lequel a, b, c et d sont définis comme suit :
a est dans la plage de 0,6 à 0,8,
b est dans la plage de 0,01 à 0,25,
c est dans la plage de 0,05 à 0,3,
d est dans la plage de zéro à 0,1.

5. Procédé selon l'une quelconque des revendications précédentes dans lequel ledit oxyde de métal de transition lithié est une poudre avec un diamètre de particule moyen des particules secondaires dans la plage de 1 à 50 µm.

6. Procédé selon l'une quelconque des revendications précédentes dans lequel ledit composé fluoré est mis en contact à l'état solide avec ledit oxyde de métal de transition lithié.

7. Procédé selon l'une quelconque des revendications 1 à 5 dans lequel ledit composé fluoré est transféré dans la phase gazeuse par sublimation ou décomposition en un sel et HF avant sa mise en contact avec ledit oxyde de métal de transition lithié.

8. Procédé selon l'une quelconque des revendications précédentes dans lequel ledit oxyde de métal de transition lithié contenant au moins deux cations de métal de transition différents est traité avec dans la plage de 0,5 à 2 % en poids de composé fluoré.

9. Oxyde de métal de transition lithié fluoré comprenant au moins un composé selon la formule générale (I)
Li₁₊ₓ(NiₐCO_{b}Mn_{c}M_{d})₁₋ₓO₂ (I)
dans laquelle
x est dans la plage de zéro à 0,2
a est dans la plage de 0,5 à 0,9,
b est dans la plage de zéro à 0,35,
c est dans la plage de 0,05 à 0,4,
d est dans la plage de zéro à 0,2,
avec a + b+ c+ d = 1
M étant choisi parmi Al, Mg, Ca, V, Mo, Ti, Fe, Zn, Nb, W, et Zr,
dans lequel les particules du composé ci-dessus sont partiellement recouvertes avec LiF.

10. Oxyde de métal de transition lithié fluoré selon la revendication 9 où ledit oxyde de métal de transition lithié fluoré contient dans la plage de 0,01 à 1 % en poids de Li₂CO₃, déterminé en Li₂CO₃ et par rapport audit oxyde de métal de transition lithié fluoré.

11. Oxyde de métal de transition lithié fluoré selon la revendication 9 ou 10 où ledit oxyde de métal de transition lithié fluoré est une poudre ayant un diamètre de particule moyen des particules secondaires dans la plage de 1 à 50 µm.

12. Électrode pour une batterie au lithium-ion comprenant
(A) au moins un oxyde de métal de transition lithié fluoré selon l'une quelconque des revendications 9 à 11,
(B) du carbone dans un état électriquement conducteur,
(C) un liant.

13. Cellule électrochimique comprenant au moins une électrode selon la revendication 12.
